# EUROPÄISCHE PATENTSCHRIFT

(11) **EP 1 958 761 B1**
(45) Veröffentlichungstag und Bekanntmachung des Hinweises auf die Patenterteilung: **25.09.2013**
(21) Anmeldenummer: 08003012.5
(22) Anmeldetag: 19.02.2008
(51) Int. Cl.: B32B 27/10

(54) **Fertigungsverfahren einer Dachversteifung**
Method for production a roof reinforcement
Procédé de fabrication d'un renfort de toit

(30) Priorität: 19.02.2007 DE 102007008454; 25.06.2007 DE 102007029510
(43) Veröffentlichungstag der Anmeldung: 20.08.2008
(73) Patentinhaber: Johnson Controls Headliner GmbH, 66802 Uberherrn (DE)
(72) Erfinder: Blasius, Oliver, 66787 Differten (DE); Schumacher, Silke, 66679 Losheim (DE); Buchheit, Christian, Merten, 57550 (FR)
(74) Vertreter: Wolff, Felix

(56) Entgegenhaltungen:
- EP-A1- 1 319 554
- EP-A1- 1 561 568
- US-A- 5 114 524
- US-A1- 2004 234 744

## Beschreibung

Die Erfindung betrifft ein Verfahren zur Fertigung einer Dachversteifung für ein Kraftfahrzeug.

Ein Herstellverfahren für eine Dachversteifungen ist beispielsweise aus der Druckschrift DE 198 47 804 C1 bekannt. Dabei wird eine Schaumschicht, beispielsweise aus halbhartem Polyurethanschaum, auf beiden Flächenseiten mit einem Klebstoff versehen und mit Deckschichten belegt. Dieser Verbund wird nachfolgend in ein beheiztes Werkzeug eingelegt und unter Aushärtung des Klebers zu einem dreidimensionalen Formteil verprasst. Die EP 0 825 066 A2 offenbart ein Halbzeug aus einer inneren Schaumschicht und zwei äußeren Kraftlinern, die nach dem Zusammenfügen auseinandergeschnitten werden. Dieses Verfahren ist vergleichsweise aufwendig. Weiteren relevanter Stand der Technik sind die US 5 114 524, die US 2004/0234744 A1, die EP 1561568 A1 und die EP 1319554.

Aus der Praxis ist ferner bekannt, Dachversteifungen dieser oder anderer Art (z. B. nach EP 0 825 066 A2) mit clipsartigen Befestigungselementen zu versehen, welche nach dem Verkleben der Dachversteifung mit der Innenseite der Dachhaut des Fahrzeugs zur Anbringung des Dachhimmels oder dergleichen dienen. Beispielhaft seien hier sogenannte Metalltöpfe, Metallrahmen, Metallhalter mit Kunststoffclips und/oder Kunststoffclips genannt.

Es war die Aufgabe der vorliegenden Erfindung ein Verfahren zur Herstellung einer Dachversteifung zur Verfügung zu stellen, das einfach und kostengünstig durchzuführen ist.

Gelöst wird die Aufgabe mit einem Verfahren zur Herstellung einer Dachversteifung für Fahrzeuge gemäß Patentanspruch 1.

Die vorliegenden Erfindungen sind auf ein Verfahren zur Herstellung einer Dachversteifung gerichtet. Die erfindungsgemäß resultierende Dachversteifung wird unterhalb der Dachhaut, die in der Regel aus Stahlblech gefertigt ist, im Innenraum des Fahrzeuges angeordnet, vorzugsweise mit der Dachhaut verklebt, und dient zur Erhöhung der Dachbeulsteifigkeit. Weitere mögliche Funktionen der Dachversteifung sind die Aussenschalldämpfung, die Reduktion der Dachschwingungen, die Senkung des Verletzungsrisikos der Fahrzeuginsassen, sowie Wärmedämmung. Die aus dem erfindungsgemäßen Verfahren resultierende Dachversteifung weist gegebenenfalls Aussparungen beispielsweise für Beleuchtung, Spiegel, Lautsprecher, Verkabelung, Bedienelemente und dergleichen auf, die in den Aussparungen vorzugsweise mittels eines Metalltopfs, Metallhaltern mit Kunststoffclipsen oder Kunststoffclipsen gehalten werden. In den Aussparungen können auch Haltungen für einen Dachhimmel, der sich unterhalb der Dachversteifung befindet, angeordnet sein. Die Dachversteifung weist ein geringes Gewicht auf, ist glasfrei und emittiert vorzugsweise allenfalls geringfügig unerwünschte Substanzen (fogging). Die Form und die Dicke der Dachversteifung richtet sich u.a. nach der Dachwölbung und der Dachblechdicke.

Erfindungsgemäß weist die Dachversteifung einen Schaumteil auf. Bei diesem Schaum kann es sich um beliebigen Hartschaum handeln, der offenzellig oder geschlossenzellig sein kann. Vorzugsweise handelt es sich um einen Polyurethanhartschaum.

Dieses Schaumteil weist eine erste und eine zweite Seite auf, die sich besonders bevorzugt diametral gegenüber liegen und ganz besonders bevorzugt die Seiten sind, die parallel zu der Dachhaut verlaufen. Diese Seiten werden jeweils mit einem Kraftliner verbunden. Vorzugsweise wird der Kraftliner jeweils an die Seiten angeklebt.

Der Kraftliner ist ein bahnförmiges Material und besteht vorzugsweise aus einemkunststoffmaterial, ganz besonders bevorzugt aus Polyethylen (PE). Es kann sich jedoch auch um einen papierähnlichen Werkstoff handeln, der vorzugsweise mit einem Kunststoff, insbesondere Polyethylen beschichtet ist. Mit dem Kraftliner wird die mechanische Festigkeit der resultierenden Dachversteifung erhöht.

Gemäß der ersten Ausführungsform der vorliegenden Erfindung wird eine Seite des Schaumteils mit dem Kraftliner versehen, vorzugsweise verklebt. Sodann wird dieser Verbund gedreht und dann mit der anderen Seite auf eine zweite Kraftlinerschicht gelegt, die vorzugsweise vorher mit einem Klebstoff versehen worden ist. Die Drehung beträgt demnach vorzugsweise mehr als 90^, besonders bevorzugt 90-180°.

Gemäß einer anderen erfindungsgemäßen Lösung werden zwei Kraflinerschichten in einem Abstand zueinander angeordnet und auf den jeweils zueinander weisenden Flächen mit einem Klebstoff versehen. Das Schaumteil wird dann zwischen den beiden Kraftlinerschichten platziert und mit diesen verbunden, vorzugsweise verklebt.

Der Klebstoff kann ein 1 K- oder ein 2K-Kleber sein, vorzugsweise auf der Basis eines Polyurethansystems oder eines vorzugsweise reinen Isozyanats.

Vor dem Verbinden mit dem Kunststoffteil, werden die Schicht vorzugsweise von einer Bahn abgelängt. Dies erfolgt mit einem Schneidwerkzeug, beispielsweise einem Messer.

Der so hergestellte Verbund wird vorzugsweise in einer Press und/oder einem Stanzwerkzeug weiterbearbeitet. Hierbei erhält er seine endgültige, vorzugsweise dreidimensionale Struktur und/oder gegebenenfalls benötigte Ausnehmungen werden in den Verbund eingebracht. Das Pressen kann unter Temperatureinfluss erfolgen. Vorzugsweise härtet der Verbund beim Pressen. Der hergestellte Verbund kann so groß sein, dass mehrere Dachversteifungen daraus gefertigt werden können. Diese werden dann vorzugsweise in dem Press und/oder Stanzwerkzeug vereinzelt.

Vorzugsweis werden an dem Verbund weitere Schichten angeordnet. Dies erfolgt vor oder nach dem Pressen, vorzugsweise jedoch vor dem Pressen. Diese Schichten werden vorzugsweise mit dem Verbund verklebt. Die zusätzlichen Schichten können sich zwischen dem Schaumteil und einem Kraftliner befinden und/oder auf den Kraftliner als zusätzliche Schicht aufgeklebt werden. Vorzugsweise weist der Verbund auf beiden Seiten des Schaumteils dieselben Schichten und dieselbe Schichtfolge auf. Die neben den Kraftlinern zusätzlichen Schichten sind vorzugsweise aus Kunststoff, insbesondere aus Polyethylen.

Vorzugsweise werden an dem Verbund Anbauteile angeordnet. Dies erfolgt vorzugsweise nachdem der Verbund gepresst und/oder gestanzt worden ist. Bei diesen Teilen handelt es sich insbesondere um Teil, mit denen Bedienelemente, Leuchten, Kabel, Spiegel und dergleichen am Dach des Kraftfahrzeuges befestigt werden.

Ein weiterer Gegenstand der vorliegenden Erfindung ist eine Dachversteifung insbesondere erhältlich durch das Verfahren gemäß einem der voranstehenden Ansprüche.

Die oben zu dem erfindungsgemäßen Verfahren gemachten Ausführungen gelten für die erfindungsgemäße Dachversteifung gleichermaßen.

Vorzugsweise ist der Kraftliner aus einem Kunststoffmaterial insbesondere Polyethylen.

Vorzugsweise werden die Kraftliner mit einem Kleber, vorzugsweise einem Einkomponentenkleber, der besonders bevorzugt aus einem PU-System ist, an das Kunststoffteil geklebt.

Vorzugsweise weist die resultierende Dachversteifung eine Kleberaupe auf, mit der sie an die Dachhaut geklebt wird. Vorzugsweise ist die Kleberaupe so angeordnet, das sie einen geschlossenen Ring bildet. Diese bevorzugte Ausführungsform der erfindungsgemäßen Dachversteifung hat den Vorteil, dass die Dachversteifung an dem Dach angeordnet und dann innerhalb des Rings ein Vakuum angelegt werden kann, mit dem die Dachversteifung dann gegen die Dachhaut gezogen wird. Alternativ oder zusätzlich kann die Dachversteifung auch von unten gegen die Dachhaut gedrückt werden. Dies kann beispielsweise mit einem Luftkissen erfolgen, das in dem Fahrzeuginnenraum angeordnet und dann aufgeblasen wird und das sie Dachversteifung gleichmäßig gegen die Dachhaut drückt.

Vorzugsweise wird an der Dachversteifung ein Dachhimmel aus Stoff, Leder und/oder einem Kunststoffmaterial angeordnet. Dessen Befestigung kann stoff- form- und/oder kraftschlüssig erfolgen. Vorzugsweise wird der Dachhimmel jedoch so angeordnet, dass er von der Dachversteifung wieder ablösbar ist, was ein späteres Recyclingverfahren vereinfacht. Vorzugsweise weist die Dachversteifung deshalb Befestigungsmittel auf, mit denen beispielsweise der Dachhimmel an der Dachversteifung befestigbar ist. Vorzugsweise handelt es sich bei dem Befestigungsmittel um einen Klettverschluss. Dieser erlaubt einerseits eine gute Verbindung zwischen Dachhimmel und Dachversteifung und andererseits ein einfaches Recycling.

Im folgenden werden die Erfindungen anhand der Figuren 1 - 10 erläutert. Dies Erläuterungen sind lediglich beispielhaft und schränken den allgemeinen Erfindungsgedanken nicht ein. Die Erläuterungen gelten für alle Erfindungen gleichermaßen.
- **Figuren 1 - 4**: zeigen eine Ausführungsform des erfindungsgemäßen Verfahrens.
- **Figur 5**: zeigt das Press- und/oder Stanzwerkzeug.
- **Figur 6**: zeigt die resultierende Dachversteifung.
- **Figur 7**: zeigt eine andere Ausführungsform des erfindungsgemäßen Verfahrens.
- **Figur 8**: zeigt einen möglichen Schichtenaufbau der Dachversteifung
- **Figur 9**: die Dachversteifung mit Kleberaupe und Befestigungsmitteln
- **Figur 10**: zeigt ein Detail des Befestigungsmittels

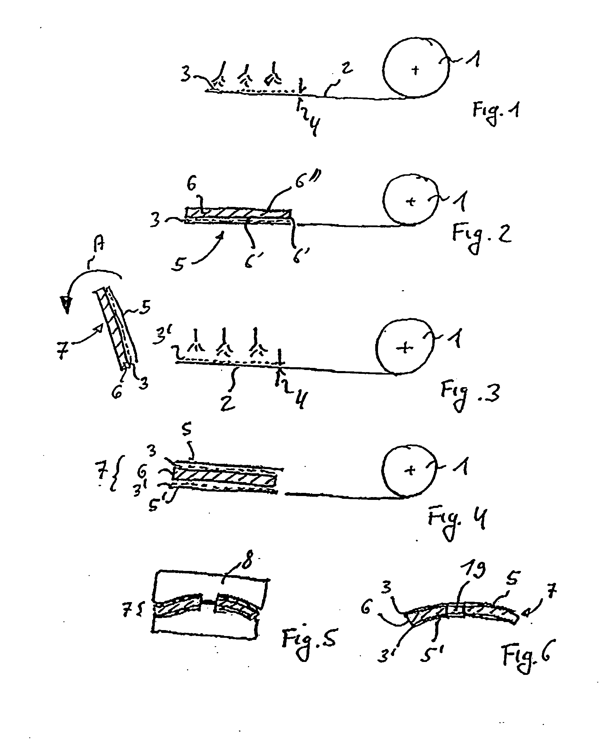

Bei der erfindungsgemäßen Fertigung einer Dachversteifung wird von einem Wickel 1 ein mit Polyethylen (PE) beschichteter, bahnförmiger Kraftliner 2 abgewickelt. Dieser wird mit dem Messer 4 auf Länge geschnitten und auf einer Flächenseite mit Kleber 3 versehen (Figur 1). Auf den so vorbereiteten Zuschnitt 5 wird eine Schaumplatte 6 aufgelegt (Figur 2). Dieser Verbund 7 wird um 180° gedreht (Pfeil A), während ein weiterer Zuschnitt 5' von Kraftliner mit Kleber 3' versehen wird (Figur 3). Diese Verfahrensschritte können auch sequentiell erfolgen. Auf diesen wird der Verbund 7 abgelegt, welcher nachfolgend aus der mittleren Schaumplatte 6, zwei Schichten Kleber 3, 3' und den die Flächenseiten der Schaumplatte 6 bedeckenden Zuschnitten 5, 5' des Kraftliners 2 besteht (Figur 4).

Der Verbund 7 wird nachfolgend in ein (ggf. mehrere Verbunde 7 aufnehmendes) Press- und Stanzwerkzeug 8 eingelegt und zu einem dreidimensionalen Bauteil mit Verprägungen und/oder Ausnehmungen 19 zur Aufnahme von Befestigungselementen verpresst (Figuren 5 und 6). Als Kleber wird vorzugsweise ein 1 K-PU-Kleber eingesetzt. Nach der Entnahme des Verbunds 7 aus dem Press- und Stanzwerkzeug können noch weitere Stanzungen in diesen eingebracht werden.

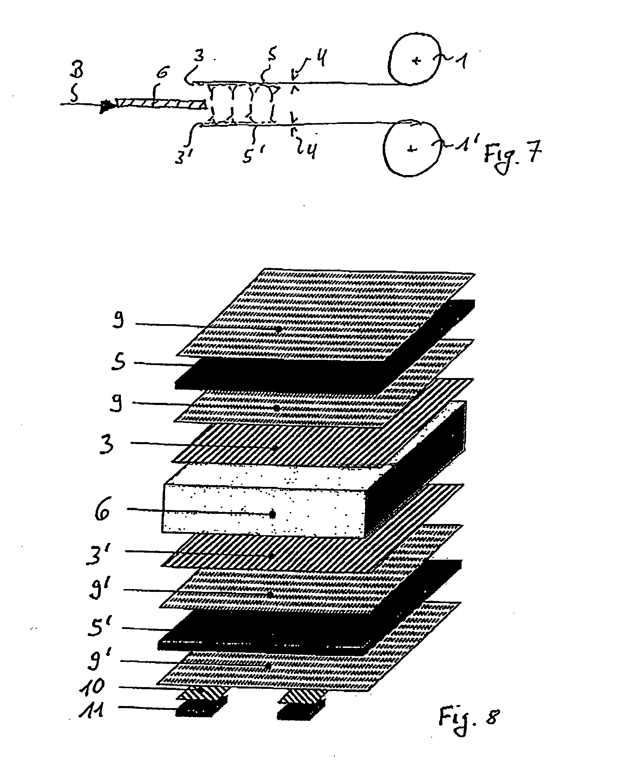

Alternativ ist vorgesehen, die Zuschnitte 5, 5' des Kraftliners 2 von zwei 10 getrennten Wickeln 1,1' abzunehmen und die Schaumplatte 6 dann dazwischen einzubringen (Pfeil B in Figur 7). Dieser Verbund 7 wird dann ebenfalls in einem Press- und Stanzwerkzeug 8 weiterbearbeitet.

Figur 8 zeigt den vollständigen Aufbau des Verbunds 7 einschließlich einer weiteren PE-15 Beschichtungen 9, 9'. Die Beschichtungen 9, 9' dienen vorzugsweise als Wasserdampfbarriere und durch weiteren Kleber 10 angebrachten Anbauteilen 11.

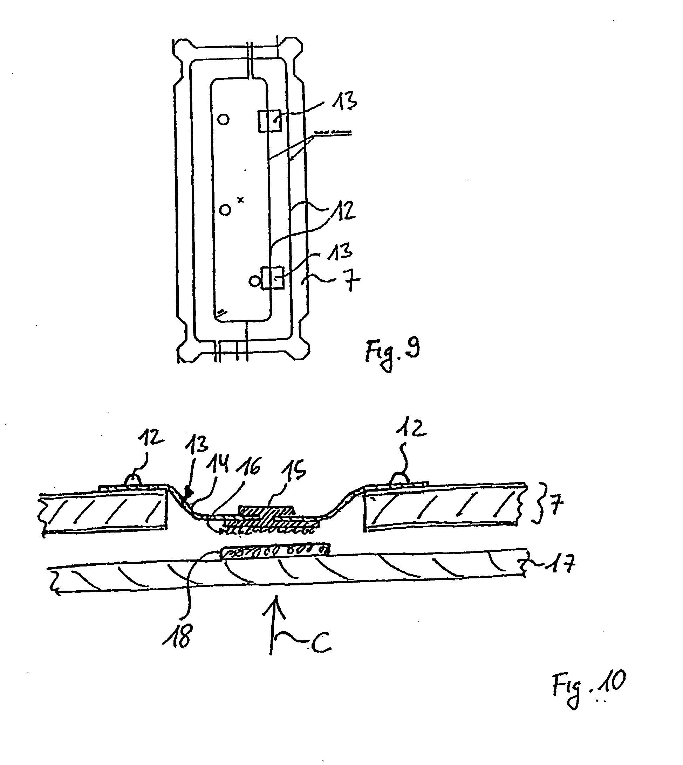

In Figur 9 ist der Verlauf der Klebstoffraupen 12 auf der Oberseite des Verbunds 7 dargestellt, welche zur Verklebung des die Dachversteifung bildenden Verbundes 7 mit der Innenseite der Dachhaut dienen. Die Kleberaupe ist ringförmig angeordnet, so dass nach dem Anbringen der Dachversteifung an der Dachhaut ein Vakuum in dem Ring angelegt werden kann, mit dem die Dachversteifung an die Dachhaut gezogen wird und mit dieser einen innigen Verbund bildet. Ferner ist die Anordnung des nachfolgend beschriebenen Befestigungselements 13 ersichtlich. Mit dem Befestigungselement wird beispielsweise der Dachhimmel an der Dachversteifung befestigt.

Das in Figur 10 im Detail gezeigte Befestigungselement 13 besteht aus einem Blechclip 14 mit einem Kunststoffeinsatz 15, welche unterseitig mit den Haken 16 für eine Klettverbindung ausgestattet ist. Auf diese wird ein an der Rückseite eines Dachhimmels 17 angebrachtes Flauschband 18 aufgesetzt, was durch den Pfeil C symbolisiert ist, welches den Dachhimmel 17 nachfolgend gegen unzulässig Schwingung sichert. Der Verbund 7 ist zu diesem Zeitpunkt bereits über die Klebstoffraupen 12 mit der nicht dargestellten Dachhaut verbunden.

### Bezugszeichenliste:

- 1: Wickel
- 2: Kraftliner
- 3, 3': Kleber
- 4: Messer
- 5, 5': Zuschnitt, Schicht (von Kraftliner)
- 6: Schaumplatte, Schaumteil
- 7: Verbund
- 8: Press- und Stanzwerkzeug
- 9, 9': Polyethylen (PE)-Beschichtung
- 10: Kleber
- 11: Anbauteil
- 12: Klebstoffraupe
- 13: Befestigungselement
- 14: Blechclip
- 15: Kunststoffeinsatz
- 16: Haken (der Klettverbindung)
- 17: Dachhimmel
- 18: Flauschband (der Klettverbindung)
- 19: Ausnehmung

## Patentansprüche

1. Verfahren zur Herstellung einer Dachversteifung (7) für Fahrzeuge, die von innen an die Dachhaut angebracht wird, **dadurch gekennzeichnet, dass** ein Schaumteil (6) auf seiner ersten Seite (6') mit einer Schicht (5) Kraftliner (2) verbunden, dieser Verbund danach gedreht und dann eine zweite Seite (6'') des Schaumteils (6) mit einer Schicht (5') Kraftliner (2) verbunden wird.

2. Verfahren nach Anspruch 1, **dadurch gekennzeichnet, dass** der Verbund um mehr als 90°, vorzugsweise 90 -180° gedreht wird.

3. Verfahren nach einem der voranstehenden Ansprüche, **dadurch gekennzeichnet, dass** die Schicht (5, 5') vor dem Verbinden von einer Bahn abgelängt wird.

4. Verfahren nach einem der voranstehenden Ansprüche, **dadurch gekennzeichnet, dass** zwischen die Schicht (5, 5') und das Schaumteil (6) ein Kleber (3, 3') angeordnet wird.

5. Verfahren nach einem der voranstehenden Ansprüche, **dadurch gekennzeichnet, dass** der Verbund (7) in einem Press und/oder Stanzwerkzeug (8) weiterbearbeitet wird.

6. Verfahren nach einem der voranstehenden Ansprüche, **dadurch gekennzeichnet, dass** der Verbund (7) weitere Schichten (9, 9', 10) aufweist.

7. Verfahren nach einem der voranstehenden Ansprüche, **dadurch gekennzeichnet, dass** an dem Verbund (7) Anbauteile (11) angeordnet werden.

## Claims

1. Method for producing a roof reinforcement (7) for vehicles which is applied to the roof skin from inside, **characterized in that** a foam part (6) is connected on its first side (6') to a layer (5) of kraftliner (2), this composite is subsequently rotated and then a second side (6") of the foam part (6) is connected to a layer (5') of kraftliner (2).

2. Method according to Claim 1, **characterized in that** the composite is rotated through more than 90°, preferably 90-180°.

3. Method according to either of the preceding claims, **characterized in that** the layer (5, 5') is cut to length from a web before the connection.

4. Method according to one of the preceding claims, **characterized in that** an adhesive (3, 3') is arranged between the layer (5, 5') and the foam part (6).

5. Method according to one of the preceding claims, **characterized in that** the composite (7) is further processed in a pressing and/or stamping tool (8).

6. Method according Lo one of the preceding claims, **characterized in that** the composite (7) has further layers (9, 9', 10).

7. Method according to one of the preceding claims, **characterized in that** attachment parts (11) are arranged on the composite (7).

## Revendications

1. Procédé de fabrication d'un renfort de toit (7) pour véhicules, qui est monté depuis l'intérieur contre l'habillage du toit, **caractérisé en ce qu'**une partie en mousse (6) est connectée sur son premier côté (6') à une couche (5) de Kraft (2), cet assemblage est ensuite tourné puis un deuxième côté (6'') de la partie en mousse (6) est connecté à une couche (5') de Kraft (2).

2. Procédé selon la revendication 1., **caractérisé en ce que** l'assemblage est tourné de plus de 90°, de préférence de 90 - 180°.

3. Procédé selon l'une quelconque des revendications précédentes, **caractérisé en ce que** la couche (5, 5') est découpée à la longueur avant la connexion d'une bande.

4. Procédé selon l'une quelconque des revendications précédentes, **caractérisé en ce qu'**entre la couche (5, 5') et la partie en mousse (6) est disposé un adhésif (3, 3').

5. Procédé selon l'une quelconque des revendications précédentes, **caractérisé en ce que** l'assemblage (7) est traité ultérieurement dans une presse et/ou un outil d'estampage (8).

6. Procédé selon l'une quelconque des revendications précédentes, **caractérisé en ce que** l'assemblage (7) présente des couches supplémentaires (9, 9', 10).

7. Procédé selon l'une quelconque des revendications précédentes, **caractérisé en ce que** des pièces rapportées (11) sont disposées sur l'assemblage (7).
